# EUROPEAN PATENT APPLICATION

(11) **EP 2 529 862 A1**
(43) Date of publication of application: **05.12.2012**
(21) Application number: 12169859.1
(22) Date of filing: 29.05.2012
(51) Int. Cl.: B23B 13/12, B23B 31/20

(54) **Feed collet for clamping a bar in a loader for automatic lathes**

(30) Priority: 31.05.2011 IT MI20110992
(71) Applicant: Pietro Cucchi S.p.A., 20060 Bussero (MI) (IT)
(72) Inventor: Cucchi, Pietro, 20060 BUSSERO (MI) (IT)
(74) Representative: Ottazzo, Marco Francesco Agostino

(57) **Abstract**

A collet (10) is provided to clamp the rear end of a bar inside a bar loader for feeding a bar to a lathe. Collet (10) comprises a sleeve (12) at the front end and a rear end (16), configured for coupling with the head of a pusher of the loader. The sleeve (12) is provided with a first internal cavity (18) for receiving a rear end of the bar. The wall of the sleeve (12) along the first internal cavity (18) features one or more elongated through slots (22). The surface region of the sleeve (12) placed around each through slot (22) is bent towards the inside of the first internal cavity (18), so as to create, exclusively around each through slot (22), a corresponding deformed area (24). The sum of the separate deformed areas (24) generates a bottleneck section on the sleeve (12) which retains the rear end of the bar when such a bar is introduced into the collet (10).

## Description

The present invention refers to an improved collet of the type used for clamping the rear of a bar inside a loader for lathes.

In the field, automatic loaders for lathes are known provided with a motorized pusher which is, in turn, equipped at the front with a collet to clamp the rear end of a bar. The forward movement of the pusher feeds the bar to the lathe, whereas the subsequent return of the pusher extracts from the lathe the remaining piece of the bar after being worked.

Collets made according to the state of the art are usually provided with elastic fingers which project at the front, so as to automatically clamp the tail-end of the bar when such a bar is pushed against the collet. In such a collet structure the flexibility of the elastic sectors or fingers does not always satisfy the requirements of a good hold on the bar. This translates, ultimately, in an increase of the vibrations and, at times, in the breaking of the elastic sectors. Moreover, the fact that the elastic fingers are open in the front part of the collet can be harmful or dangerous, since the front part of the collet can operate as a cutting blade inside the guide of the lathe loader.

In patent US 4 093 246 it has been proposed to make a support device formed by a hollow cylindrical element on the outer wall of which oblique through grooves are obtained. The cylindrical element is then radially squashed in a middle section, so as to obtain a narrow inner passage which constitutes a support for the through bars in it.

A similar support device, although operating as a counter-collet for moving the bar forwards inside the spindle of the lathe, it has however been found as not suitable for providing an improved hold and a reduction of the vibrations if used as a rear hold collet, since the entire structure is elastic and the thrust that a bar exerts on the narrow section causes a continuous elastic distortion of the entire support device. Moreover, the thrusts against the narrow section, formed by inclined strips of material, generate a twisting force that tends to make the two ends of the device rotate axially, in opposite directions. All this causes an increase in the vibrations, with consequent decrease and worsening of the guide functions of the device.

Also document GB 2 200 860 A illustrates a support device formed by a hollow cylindrical element on the outer wall of which, oblique through grooves are obtained. The hollow cylindrical element is completely deformed in its central part. In other words, the outer diameter of the hollow cylindrical element measured at its central part is considerably smaller with respect to the maximum outer diameter, that is to say measured at the ends (regions in which the oblique through grooves are not provided). The support device illustrated in document GB 2 200 860 A is therefore completely squashed in its central part, thus having the same drawbacks as the support device illustrated in the aforementioned document US 4 093 246.

In utility model IT 246983 U in the name of the same Applicant it has thus been proposed to make a collet in the form of a sleeve provided, on its side wall, with elastic strips. The elastic strips project towards the inside of the sleeve-shaped collet so as to come into contact and support the end of the bar inserted in the collet itself.

Also a similar sleeve collet, however, still has some drawbacks. One first drawback is due to the fact that the collet is not capable of guaranteeing a particularly strong hold force, due to the elasticity of the strips. Another drawback is due to the possibility of breaking due to fatigue of the strips, since the vibrations induced by the lathe to the bar being worked are always very strong.

The purpose of the present invention is therefore that of making an improved collet, of the type used for clamping the rear of a bar inside a loader for lathes, which is capable of solving the aforementioned drawbacks of the prior art in an extremely simple, cost-effective and particularly functional manner.

In detail, one purpose of the present invention is that of making an improved collet for clamping bars inside a loader for lathes that is capable of ensuring a strong hold force on the bar.

Another purpose of the invention is that of making an improved collet for clamping bars inside a loader for lathes that is capable of minimising the possibility of breaking due to fatigue of the collet itself.

These purposes according to the present invention are achieved by making an improved collet, of the type used for clamping the rear of a bar inside a loader for lathes, as outlined in claim 1.

Further characteristics of the invention are highlighted in the dependent claims, which are an integrating part of the present description.

The characteristics and the advantages of an improved collet for clamping bars inside a loader for lathes according to the present invention shall become clearer from the following description, given as an example and not for limiting purposes, with reference to the attached schematic drawings in which:
figure 1 is a side elevation view of a preferred embodiment of the improved collet for clamping bars inside a loader for lathes according to the present invention;
figure 2 is a cross-section view, obtained along the line II-II of figure 1, of the collet of figure 1;
figure 3 is a longitudinal section view, obtained along the line III-III of figure 1, of the collet of figure 1;
figure 4 is an enlarged longitudinal section view showing a detail of the collet illustrated in figure 3;
figure 5 is a side elevation view showing one of the manufacturing phases of the collet of figure 1; and
figure 6 is a side elevation view of another embodiment of the improved collet for clamping bars inside a loader for lathes according to the present invention.

With reference to the figures, an improved collet, according to the invention, is shown wholly indicated with reference numeral 10. The collet 10 is configured to clamp the rear end of a bar inside a bar loader for lathes (not shown).

The collet 10 comprises a body or sleeve 12, having a generic cylindrical shape and a wall thickness that is suitable for providing a substantially rigid behaviour under the action of the normal forces which are exerted on the collet 10 during use. The body 12 is provided with a first front open end 14, configured for inletting into it the end of a bar to be clamped, and a second rear end 16, configured for coupling with the head of a pusher of the loader. The body 12 of the collet 10 is moreover provided with a first internal cavity 18, placed at the first front open end 14 and able to receive and keep the end of the bar, and a second internal cavity 20, placed at the second rear end 16 and preferably threaded in order to obtain the assembly of the collet 10 on the pusher of the loader. The first internal cavity 18 has a diameter D that is substantially constant for the entire length L of the first internal cavity 18 itself.

On the wall of the body 12, at the first internal cavity 18, one or more through slots 22 are formed substantially having a longitudinal development. The length of each through slot 22 is preferably equal to around two thirds of the length L of the first internal cavity 18. Each through slot 22 is moreover preferably arranged at the central part of the first internal cavity 18.

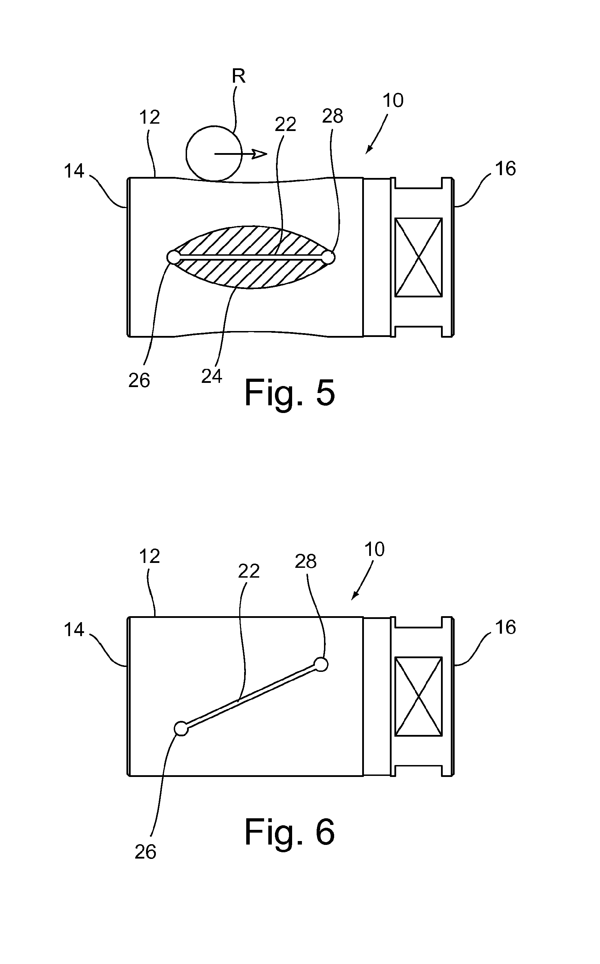

The surface region of the body 12 arranged around each through slot 22 is bent towards the inside of the first internal cavity 18 according to a predetermined distance K, so as to create, exclusively around each through slot 22, a corresponding deformed area 24 (figure 5). The union of the separate deformed areas 24 generates a bottleneck on the body 12 which retains the tail-end of the bar when the latter is introduced in the collet 10.

In detail, each deformed area 24 extends from the relative through slot 22 according to a maximum distance equal to around 1/6 of the diameter D of the first internal cavity 18. In absolute value, each deformed area 24 extends from the relative through slot 22 according to a distance in the range from 5 mm to 10 mm. In turn, the predetermined distance K is equal to around 1/50 of the length L of the first internal cavity 18.

Each deformed area 24 can be obtained through pressing, for example with a roller R (figure 5), before the hardening heat treatment phase and the possible tempering phase of the collet 10. By increasing or decreasing the value of the distance K, which determines the depth and the extension of the deformed areas 24, and/or by modifying the parameters related to the thermal treatment of the collet 10 it is possible to make the insertion force of the bar into the collet 10 itself vary.

The first open front end 14 has a circumferential edge that is completely closed or, in other words, each through slot 22 does not open frontally with respect to the body 12. In such a way, the first open front end 14 of the collet 10 is perfectly cylindrical and is not deformed by the movements of the bar while working in the lathe, as occurs on the other hand, with common collets that are provided at the front with elastic sectors or fingers. The body 12 of the collet 10 can thus have a thickness that is also very thin, in any case guaranteeing a strong hold force and an excellent strength.

With respect to collets equipped with elastic strips that project inwards with respect to the sleeve, the collet 10 according to the invention has the advantage of having a deformed area the total extension of which is much greater than that of the elastic strips. The arrangement of the deformed areas 24 on the surface of the body 12 guarantees a strong holding force and a low probability of breaking through fatigue of the collet 10.

At the opposite ends of each through slot 22 respective enlarged holes 26 and 28 can be provided, substantially round shaped. The function of the holes 26 and 28 is that of reducing the probability of the formation of cracks on the body 12 from the ends of the through slots 22.

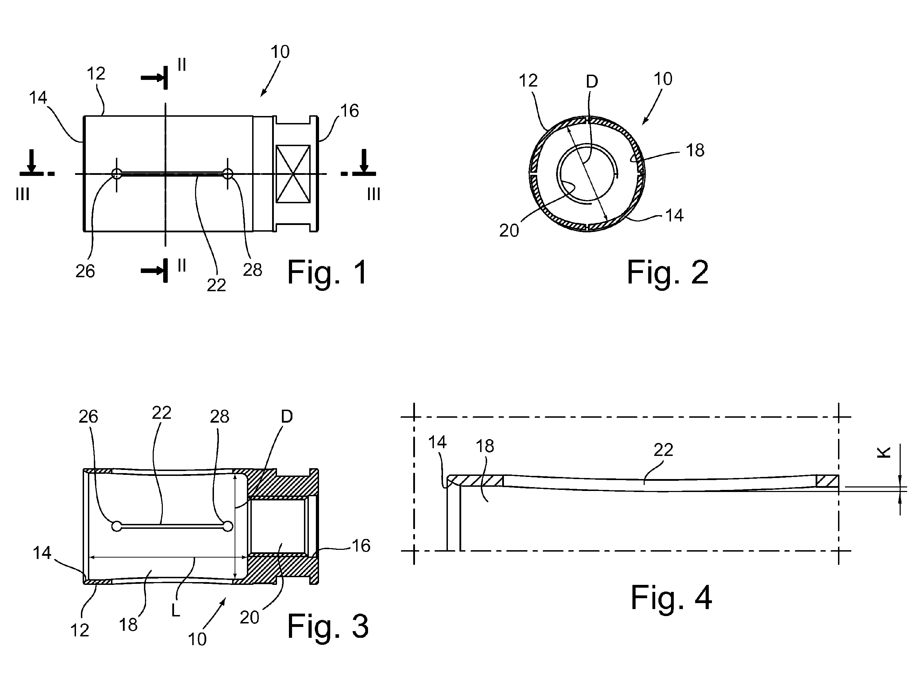

As shown in the preferred embodiment of figures 1 to 5, each through slot 22 is preferably oriented in the axial direction of the body 12 of the collet 10. In the case in which the collet 10 is intended to clamp the tail-end of the polygonal sectioned bars, each through slot 22, on the other hand, can be arranged obliquely with respect to the rotation axis of the body 12, so as to guarantee the hold on the corners of the bar (see figure 6).

The number of through slots 22 to be made on the surface of the body 12 substantially depends on the dimensions of the collet 10. For example, for collets 10 having an outer diameter equal to 30 mm, three through slots 22 and three respective deformed areas 24 are provided on the body 12, disposed symmetrically and mutually spaced one from the other. For collets 10 having an outer diameter of between 30 mm and 60 mm four through slots 22 and four respective deformed areas 24 are provided, again disposed symmetrically and mutually spaced one from the other. Finally, for collets 10 having an outer diameter of above 60 mm, five through slots 22 and respective deformed areas 24 can be provided.

It has thus been seen that the improved collet for clamping bars inside a loader for lathes according to the present invention achieves the purposes previously highlighted.

The improved collet for clamping bars inside a loader for lathes of the present invention thus conceived can in any case undergo numerous modifications and variants, all covered by the same inventive concept; moreover, all the details can be replaced by technically equivalent elements. In practice the materials used, as well as the shapes and the dimensions, can be any according to the technical requirements.

The scope of protection of the invention is thus defined by the attached claims.

## Claims

1. Collet (10) configured to clamp the rear end of a bar inside a bar loader for lathes, comprising a sleeve (12) provided with a first front open end (14), configured for inletting into its inside the rear end of the bar to be clamped, and a second rear end (16), configured for coupling with the head of a pusher of the loader, said sleeve (12) being also provided with a first internal cavity (18), placed at the first front open end (14) and able to receive and keep the rear end of the bar, and a second internal cavity (20), placed at the second rear end (16) in order to obtain the assembly of the collet (10) on the pusher of the loader, on the wall of the sleeve (12), at the first internal cavity (18), one or more through slots (22) are obtained, having a substantially longitudinal development, the collet (10) being **characterised in that** the first internal cavity (18) has a diameter (D) that is substantially constant for the entire length (L) of said first internal cavity (18), the surface region of the sleeve (12) arranged around each through slot (22) being bent towards the inside of the first internal cavity (18) according to a predetermined distance (K), so as to create, exclusively around each through slot (22), a corresponding deformed area (24), the union of the different deformed areas (24) generating a bottleneck on the sleeve (12) which retains the rear end of the bar when said bar is introduced in the collet (10), the arrangement of the deformed areas (24) on the surface of the sleeve (12) guaranteeing a high holding force and a low probability of breaking due to fatigue of the collet (10).

2. Collet (10) according to claim 1, **characterized in that** each deformed area (24) extends from the relative through slot (22) according to a maximum distance equal to around 1/6 of the diameter (D) of the first internal cavity (18).

3. Collet (10) according to claim 1 or 2, **characterized in that** said predetermined distance (K) is equal to around 1/50 of the length (L) of the first internal cavity (18).

4. Collet (10) according to any of the claims from 1 to 3, **characterized in that** the length of each through slot (22) is equal to around two thirds of the length (L) of the first internal cavity (18).

5. Collet (10) according to any one of claims from 1 to 4, **characterized in that** each through slot (22) is positioned at the central part of the first internal cavity (18).

6. Collet (10) according to any one of claims 1 to 5, **characterized in that** the first front open end (14) has a circumferential edge completely closed or, in other words, each through slot (22) does not open frontally with respect to the sleeve (12), so that said first front open end (14) is perfectly cylindrical and not deformed by the movements of the bar while working in the lathe.

7. Collet (10) according to any one of claims 1 to 5, **characterized in that** at the opposite ends of each through slot (22) respective enlarged holes (26, 28) are provided, the function of which is that to reduce the probability of formation of cracks on the sleeve (12) starting from the ends of the through slots (22).

8. Collet (10) according to claim 7, **characterized in that** the enlarged holes (26, 28) are substantially round shaped.

9. Collet (10) according to any one of claims 1 to 8, **characterized in that** each through slot (22) is oriented in the axial direction of the sleeve (12).

10. Collet (10) according to any one of claims 1 to 8, **characterized in that** each through slot (22) is placed obliquely with respect to the rotation axis of the sleeve (12), so as to guarantee the tightness on the corners of a polygonal cross-section bar.

11. Collet (10) according to any one of the previous claims, **characterized in that** on the sleeve (12) from three to five through slots (22) and from three to five respective deformed areas (24) are provided, disposed symmetrically and mutually spaced one from the other.

12. Collet (10) according to any one of the previous claims, **characterized in that** each deformed area (24) is obtained through pressing, before the hardening heat treatment phase and any tempering phase of the collet (10).
